# FASCICULE DE BREVET EUROPEEN

(11) **EP 1 409 227 B1**
(45) Date de publication et mention de la délivrance du brevet: **29.09.2010**
(21) Numéro de dépôt: 02743570.0
(22) Date de dépôt: 18.07.2002
(51) Int. Cl.: B29C 49/16, B29C 49/78

(54) **DISPOSITIF DE SOUFFLAGE D'EMBALLAGES**
VORRICHTUNG ZUM BLASFORMEN VON VERPACKUNGEN
CONTAINER BLOWING DEVICE

(30) Priorité: 20.07.2001 FR 0109744
(43) Date de publication de la demande: 21.04.2004
(73) Titulaire: Technoplan Engineering S.A., 1228 Plan-Les-Ouates (CH)
(72) Inventeur: STORIONE, Savino, CH-1290 Versoix (CH); JOVER, Daniel, CH-1197 Prangins (CH)
(74) Mandataire: Bugnion Genève
(86) Numéro de dépôt international: PCT/IB2002/002845
(87) Numéro de publication internationale: WO 2003/009993

(56) Documents cités:
- EP-A- 0 655 313
- EP-A- 0 655 314
- WO-A-99/04951
- DE-A- 3 111 925
- GB-A- 569 093
- JP-A- 54 033 566
- US-A- 3 400 636
- US-A- 4 488 863
- US-A- 5 141 682
- PATENT ABSTRACTS OF JAPAN vol. 018, no. 115 (M-1566), 24 février 1994 (1994-02-24) & JP 05 309726 A (HIROKAZU YOSHIOKA;OTHERS: 02), 22 novembre 1993 (1993-11-22)

## Description

La présente invention concerne un dispositif de soufflage d'emballages, en particulier de bouteilles, à partir d'une préforme au moyen d'un gaz et de récupération dudit gaz, comprenant au moins des moyens pour alimenter le dispositif en gaz à une première pression et à une deuxième pression, des moyens d'étirage et des moyens de formage de l'emballage, des moyens de récupération, des moyens de détente à l'air libre dudit gaz jusqu'à ce qu'une troisième pression prédéterminée soit atteinte dans l'emballage, lesdits moyens de récupération comprenant an moins un volume de récupération et une vanne de récupération.

La présente invention concerne également un procédé de soufflage au moyen d'un gaz d'un emballage dans un moule à partir d'une préforme et de récupération du gaz de soufflage, selon le préambule de la revendication 7.

De nombreux problèmes existent dans le domaine des installations de soufflage d'emballages, par exemple de bouteilles, en matières synthétiques. Tout d'abord, il est nécessaire de disposer d'un gaz, comme de l'air, à une pression importante de l'ordre de 40 bar pour effectuer le soufflage des emballages dans un moule. Pour comprimer le gaz on se sert de manière classique de compresseurs. Toutefois, selon certains procédés de soufflage, on procède d'abord à un pré-soufflage de la préforme qui se transformera en emballage puis au soufflage proprement dit. Le pré-soufflage s'effectue à une pression d'environ 10 bar, puis le soufflage atteint une pression de 40 bar. Une première manière d'obtenir ces deux pressions de travail est d'utiliser deux compresseurs, l'un pour générer la pression de 10 bar, et l'autre pour générer la pression de 40 bar. Toutefois, l'utilisation de deux compresseurs est coûteuse à la fois en investissement de départ pour leur achat que pour l'entretien requis.

Une autre manière de procéder est de n'utiliser qu'un seul compresseur qui comprime le gaz à 40 bar, puis de détendre une partie du gaz comprimé à 10 bar pour l'opération de pré-soufflage. Cette méthode n'est pas non plus très avantageuse puisque l'on gaspille de l'énergie pour comprimer un gaz dont on réduit la pression sans l'avoir utilisé dans le processus de fabrication.

De plus, une fois que l'emballage a été formé par soufflage, le gaz comprimé utilisé (qui est à une pression d'environ 40 bar) est relâché à l'air libre ce qui constitue un gaspillage d'énergie.

Ainsi, il s'est avéré nécessaire de perfectionner les procédés et machines connus pour en améliorer le rendement et réduire les gaspillages d'énergie.

Des machines et des procédés permettant la fabrication d'emballages, en particulier de bouteilles en PET, par soufflage sont connus dans l'état de la technique. La demande de brevet français 2 662 631, par exemple, décrit une telle machine et un tel procédé. Selon le procédé décrit, on amène une préforme fixée à un distributeur d'air dans un moule, on met le distributeur en liaison avec une source d'air en pression, ledit air s'introduisant dans la préforme de façon à plaquer les parois de la préforme contre les bords du moule, formant ainsi l'emballage désiré. Dans le procédé décrit dans cette demande, on utilise également un vérin d'étirage dont l'action combinée à celle de l'air sous pression permet une autorégulation de l'équilibre entre la déformation axiale et transversale de la préforme ce qui résulte dans un procédé combiné d'étirage et de soufflage. Dans la machine décrite dans cette demande de brevet, l'air en pression soufflé dans la préforme est également utilisé pour actionner le vérin d'étirage. Une fois l'emballage formé, l'air de soufflage est évacué à l'air libre.

La publication antérieure WO 96/25285 décrit un autre procédé de soufflage d'emballages, comme par exemple des bouteilles à partir d'une préforme. Selon le procédé connu, un procède à un pré-soufflage de la préforme à une pression comprise entre 8 à 12 bar, puis on procède au soufflage proprement dit en injectant de l'air à 40 bar. Dans ce document également, le gaz de soufflage est rejeté à l'air libre une fois que l'emballage a été formé.

La demande de brevet EP 0 039 929 décrit un procédé de soufflage d'articles moulés dans lequel le gaz de soufflage est récupéré et recyclé pour être réutilisé. Plus particulièrement, dans cette demande, le gaz de soufflage a également une fonction de traitement de la surface intérieure de l'emballage soufflé, notamment pour améliorer l'imperméabilité de ladite surface intérieure, et à cet effet il contient un réactif approprié. Une fois le soufflage/traitement effectués, on récupère le gaz de soufflage pour une réutilisation ultérieure au moyen d'un gaz de purge, ledit gaz de purge devant lui être purifié du réactif utilisé.

La demande de brevet EP 0 655 313 décrit un procédé et un dispositif de récupération d'air de soufflage. Dans le procédé décrit, l'air en haute pression qui a été utilisé pour souffler un récipient est directement récupéré dans la source à basse pression. Ceci a l'inconvénient de créer des variations de pressions dans la source à basse pression qui nuisent à la bonne formation du récipient. De plus, le récipient soufflé est maintenu pendant un faible temps à la haute pression de soufflage ce qui nuit également à la bonne qualité du récipient soufflé.

Le brevet US 5,173,241 finalement décrit un procédé et un appareil permettant la récupération de l'air de soufflage dans une machine d'injection de matière plastique. Dans cet état de la technique, l'air soufflé est récupéré dans conteneur de récupération par aspiration et est réintroduit dans le compresseur du système.

Le but de l'invention est d'améliorer les dispositifs et procédés connus.

Plus particulièrement, la présente invention a pour but de proposer une machine de soufflage et de récupération du gaz de soufflage d'un fonctionnement simple et facile à ajuster.

Un autre but de l'invention est d'optimiser la récupération de l'air de soufflage et diminuer la consommation en énergie de la machine de soufflage.

Un autre but de l'invention est de réaliser un recyclage du gaz de soufflage et de réutiliser ce gaz pour des étapes de production d'emballages soufflés ou pour d'autres usages.

L'invention est caractérisée en ce qu'elle comporte des moyens de commande desdits moyens de récupération et de détente à l'air libre pendant et après la phase de récupération et des moyens d'ajustage permettant de régler le fonctionnement desdits moyens de commande.

Les moyens de récupération comprennent au moins une vanne de récupération et un volume de récupération, ladite vanne permettant au gaz de soufflage d'être détendu dans le volume de récupération ou à l'air libre au moyen d'un piston se déplaçant dans la vanne de récupération.

Selon un premier mode d'exécution, la vanne de récupération est commandée par des moyens mécaniques comprenant au moins une came actionnant un distributeur qui commande la position du piston de ladite vanne.

Selon un deuxième mode d'exécution, la vanne de récupération est commandée par des moyens mécaniques associés à des moyens électriques comprenant au moins un système de détection de mouvement, comme une roue dentée associée à un capteur, relié à un automate programmable qui pilote un distributeur qui commande la position du piston de ladite vanne.

Selon un troisième mode d'exécution, la vanne de récupération est commandée par un capteur de pression relié directement à un automate programmable qui pilote un distributeur qui commande la position du piston de ladite vanne.

La vanne de détente peut comporter des moyens d'équilibrage de la pression interne de la vanne, lesdits moyens étant formés soit par un perçage du piston, soit par un apport externe de gaz sous pression.

Le procédé de soufflage au moyen d'un gaz d'un emballage dans un moule à partir d'une préforme et de récupération du gaz de soufflage selon l'invention, comporte au moins les étapes suivantes:
- ) pré-soufllage à une première pression du gaz dans la préforme;
- ) soufflage à une deuxième pression du gaz dans la préforme pour obtenir l'emballage;
- ) récupération du gaz à la deuxième pression dans un volume de récupération jusqu'à l'obtention d'une troisième pression prédéterminée dans l'emballage;
- ) détente du gaz récupéré à une pression de récupération;
- ) détente à l'air libre du gaz résiduel dans l'emballage
- ) recyclage du gaz détendu, caractérisé par les étapes suivantes:
   - ) ajustage permettant le réglage de moyens de commande de la phase de récupération et de détente à l'air libre
   - ) détente à l'air libre du gaz résiduel dans l'emballage pendant et après la phase de récupération.

De préférence, la première pression vaut entre 4 et 16 bar, la deuxième pression vaut entre 25 et 40 bar et la troisième pression vaut environ 17 bar.

Le gaz récupéré peut être utilisé pour actionner des vérins d'étirage de la préforme, lesdits vérins étant actionnés pendant les étapes de pré-soufflage et de soufflage ou pour actionner des consommables de la machine de production d'emballages ou est renvoyé dans un circuit commun de gaz comprimé.

Les avantages du dispositif et du procédé selon l'invention sont nombreux. L'on peut notamment mentionner le fait que l'on réalise une économie d'énergie importante en raison de la réduction de la consommation électrique du compresseur. De plus, l'on peut installer l'invention sur des machines existantes ce qui diminue aussi les coûts de la modification.

Un autre avantage du dispositif et du procédé selon l'invention est que l'air en haute pression étant récupéré dans un volume de récupération, il n'y a pas d'influence sur l'air basse pression (préssoufflage et/ou air de service de la machine) au moment de la récupération.

De plus, l'air récupéré est détendu avant son utilisation dans l'air basse pression (préssoufflage et/ou air de service de la machine) de sorte qu'il n'a pas d'influence non plus sur l'air basse pression lors de son utilisation.

L'air récupéré réintroduit dans le réseau de l'usine n'est pas détendu à la sortie du volume de récupération de façon que l'écoulement vers le réseau d'usine soit le plus rapide possible.

Le temps de maintien de la haute pression dans l'emballage soufflé n'est pas réduit par le procédé de récupération, et ceci sans que le temps de détente du procédé soufflage ne soit augmenté.

L'invention sera mieux comprise par la description d'un mode d'exécution de celle-ci et des figures qui s'y rapportent.
La figure 1 montre un schéma de principe d'une machine selon l'invention;
La figure 2 montre un mode d'exécution d'une vanne de récupération selon l'invention;
La figure 3 une courbe illustrant la variation de pression à l'intérieur d'un emballage soufflé;
La figure 4 montre une vue en perspective d'un mode d'exécution d'une machine selon l'invention avec un premier mode d'exécution d'un système de commande de vanne de récupération;
La figure 5 montre un deuxième mode d'exécution d'un système de commande de vanne de récupération;

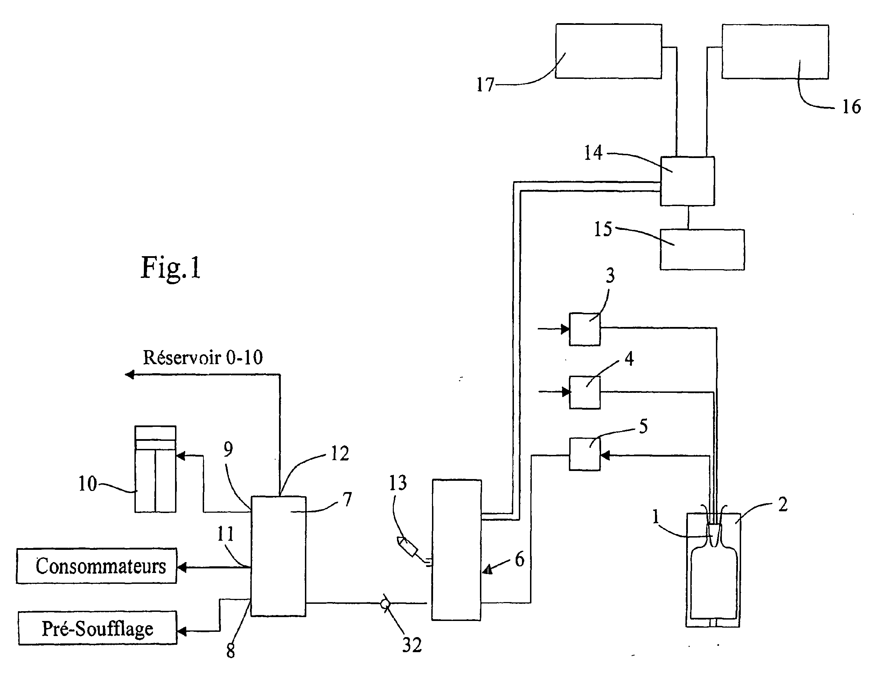

L'invention est tout d'abord décrite en référence à la figure 1. Dans cette figure, la machine de soufflage est une machine connue en soi dans l'état de la technique, comme par exemple commercialisée par la société SIDEL. Dans ces machines connues, comme indiqué ci-dessus, on apporte un gaz, par exemple de l'air, à une première pression, dite pression de pré-soufflage comprise entre 4 à 16 bar, pour le pré-soufflage d'une préforme 1 dans le moule 2 au travers d'une vanne de pré-soufflage 3, puis on amène du gaz, par exemple de l'air, à une seconde pression, dite pression de soufflage de l'ordre de 25 à 40 bar, pour le soufflage de l'emballage lui-même dans le moule 2, au travers d'une vanne de soufflage 4. La pression de soufflage dépend notamment de la complexité de l'emballage à souffler: plus la forme est simple et sans détails particuliers et plus la pression de soufflage peut être faible. Une fois que l'emballage a été soufflé, le gaz dans l'emballage qui est à la pression de soufflage, est ensuite récupéré au travers d'une vanne de décharge 5 et d'une vanne de récupération 6 dans un volume de récupération 7. Ce volume de récupération peut être constitué par un réservoir ou plusieurs réservoirs ou encore un conduit d'un volume approprié qui fait office de réservoir. Pour ne pas ralentir le cycle de production de la machine, seule une partie du gaz à la pression de soufflage peut-être récupérée, le restant du gaz étant évacué par un échappement silencieux 13 à l'air libre.

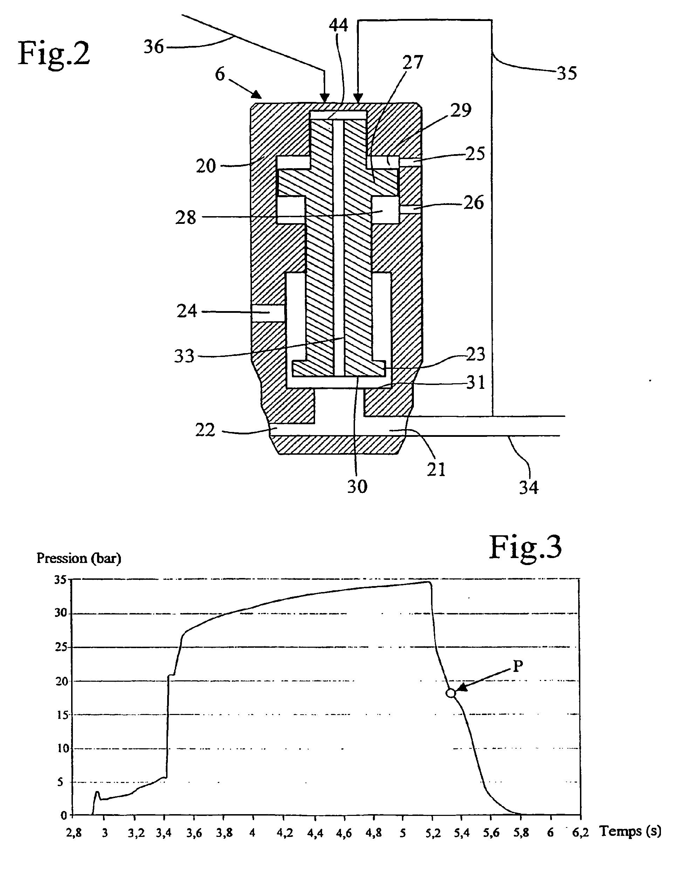

De préférence, on récupère le gaz de soufflage jusqu'à ce qu'il atteigne une pression d'environ 17 bar dans l'emballage soufflé, le restant de la détente s'opérant à l'air libre au travers de l'échappement 13 (voir les figure 1 et 3).

On obtient alors un gaz récupéré à une pression moyenne de l'ordre de 12 bar dans le volume de récupération. Ce gaz récupéré à la pression de récupération peut alors être recyclé pour différents usages, qui dépendent notamment de la configuration de la machine. Un premier usage qui peut être fait est de réutiliser ce gaz en pression pour effectuer l'opération de pré-soufflage. Ainsi, le volume de récupération peut être relié d'une part au circuit de pré-soufflage ce qui est schématisé par l'expression "pré-soufflage" et la sortie 8 de la figure 1, par exemple dans un réservoir de pré-soufflage, non représenté dans la figure, qui serait situé avant la vanne de pré-soufflage 3 dans le circuit de la machine. En fonction de la pression moyenne de récupération obtenue et de la pression de pré-soufflage à laquelle fonctionne la machine, il sera nécessaire d'interposer un détendeur entre le volume de récupération 7 et le réservoir de pré-soufflage afin de détendre le gaz recyclé à la pression effective de pré-soufflage. Ces paramètres dépendent souvent de la machine de production et doivent être ajustés au cas par cas.

Un deuxième usage dont il peut être fait du gaz récupéré est pour actionner des vérins d'étirage 10 de la préforme. Comme indiqué plus haut, on combine en général à la fois le pré-soufflage et/ou le soufflage avec un étirement longitudinal de la préforme 1 au moyen dudit vérin d'étirage 10 afin de combiner une déformation transversale et axiale de la préforme. Ces vérins sont soit actionné mécaniquement par une came, soit au moyen d'un gaz à une pression comprise entre environ 7 à 10 bar. Ainsi, le volume peut être également relié au circuit de commande des vérins d'étirage 10, éventuellement au travers d'un détendeur (non-représenté) pour amener le gaz à la pression utilisée pour l'actionnement des vérins 10. Cet usage est schématisé à la figure 1 par la sortie 9 du volume de récupération 7 et le vérin 10.

Un troisième usage du gaz récupéré est pour actionner d'autres éléments consommateurs de la machine de soufflage, ce qui est schématisé par le mot "consommateurs" dans la figure 1 et la sortie 11 du volume de récupération 7.

Un quatrième usage qui peut être fait du gaz récupéré est de le renvoyer dans les conduites communes d'alimentation en gaz, notamment en air, des locaux dans lesquels de telles machines sont installées et aussi pour alimenter le compresseur de la machine de soufflage effectuant la compression à 40 bar du gaz. En effet, de tels locaux industriels utilisent toujours du gaz en pression pour actionner des machines et dispositifs divers de sorte que du gaz sous pression est toujours utile. Cet usage est schématisé par la sortie 12 du volume de récupération et par l'expression "Réservoir 0-10" de la figure 1.

Les trois premiers usages sont particulièrement intéressants pour des machines de soufflage d'emballages rotatives dans la mesure où le gaz récupéré est réutilisé sur la machine elle-même de sorte qu'il n'est pas nécessaire d'employer des collecteurs rotatifs pour amener le gaz récupéré dans des réservoirs à l'extérieur de la machine.

La vanne 6 est commandée par des moyens appropriés qui seront décrits ci-dessous en détail, en particulier par un distributeur 14, dont la commande peut être mécanique (commande mécanique 15), électrique (commande électrique 16) ou liée à un capteur de pression (commande à pression 17).

Le procédé de soufflage au moyen d'un gaz d'un emballage dans un moule à partir d'une préforme et de récupération du gaz de soufflage, selon la figure 1 comporte les étapes suivantes:
- ) on ouvre la vanne 3 de pré-soufflage, on effectue le pré-soufflage à une première pression du gaz (par exemple entre 4 et 16 bar) dans la préforme 1 et on ferme la vanne 3;
- ) on ouvre la vanne 4, on effectue le soufflage à une deuxième pression du gaz (par exemple entre 25 et 40 bar) dans la préforme pour obtenir l'emballage et on ferme la vanne de soufflage 4;
- ) on ouvre la vanne de décharge 5 et on récupère le gaz à la deuxième pression dans un volume de récupération 7 au travers de la vanne de récupération 6 jusqu'à l'obtention d'une troisième pression prédéterminée dans l'emballage soufflé.

Dès que la troisième pression prédéterminée est atteinte, on ferme la vanne de récupération 6 et le reste du gaz de soufflage encore sous pression dans l'emballage est rejeté à l'air libre. Ensuite, l'emballage soufflé est retiré de la machine de soufflage et continue son cycle de production.

Pendant le pré-soufflage et le soufflage, on actionne un vérin d'étirage pour étirer la préforme 1.

On utilise ensuite le gaz récupéré pour d'autres opérations nécessitant du gaz sous pression, notamment pour le pré-soufflage, l'actionnement des vérins d'étirage ou d'autres consommateurs, ou encore on recycle le gaz dans un circuit commun de gaz comprimé. Toutes ces opérations de réutilisation du gaz récupéré peuvent être couplées à une détente du gaz recyclé en fonction des différences de pression.

Le procédé selon l'invention permet une récupération de l'ordre de 20 à 45% du gaz de soufflage et une réduction de la consommation électrique de l'ordre de 15 à 45%.

Un élément particulier du système de récupération est constitué par la vanne 6 de récupération. Un mode d'exécution de cette vanne 6 et des variantes sont décrits en référence à la figure 2. Cette vanne comporte un corps de vanne 20, une entrée 21 pour le gaz arrivant de l'emballage soufflé, une sortie 22 pour le gaz récupéré qui est relié au volume de récupération 7, un piston 23, une sortie 24 pour le gaz qui est détendu à l'air libre, dans le silencieux 13 (figure 1). Le corps 20 de la vanne comprend en outre deux ouvertures 25, 26 permettant d'actionner le déplacement du cylindre dans le corps au moyen d'un gaz, comme de l'air comprimé, lesdites ouvertures étant reliées au distributeur 14 de la figure 1. Le piston 23 comprend un secteur annulaire 27 d'un diamètre plus grand que le reste du piston 23, ce secteur 27 formant avec le corps 10 de la vanne deux chambres 28, 29 qui sont reliées respectivement aux ouvertures 26 et 25. Le déplacement du piston 23 dans le corps de la vanne est ainsi commandé par l'apport d'un gaz sous pression dans l'une ou l'autre desdites chambres 28, 29. Si un gaz, par exemple de l'air, est envoyé dans la chambre 28, le piston est poussé vers le haut ce qui ouvre la vanne 6 et le gaz récupéré arrivant à l'entrée 21 de la vanne sort par la sortie 24. Si du gaz, par exemple de l'air, est envoyé dans la chambre 29, le piston 23 descend et la surface frontale 30 du piston 23 vient en contact avec une surface correspondante 31 du corps de la vanne 20, ce qui a pour effet de fermer la vanne et de permettre la récupération du gaz arrivant à l'entrée 21 qui ressort à la sortie 22, en direction du volume de récupération 7 (figure 1). De préférence, on place une vanne anti-retour 32 sur la conduite liant la sortie 22 et le volume de récupération 7, afin d'empêcher la détente du gaz contenu dans le volume 7 lorsque le piston 23 est en position haute et que le gaz est envoyé à l'air libre.

Le piston 23 de la vanne 6 est particulier en ce qu'il comporte un perçage 33 qui le traverse sur toute sa longueur. Ce perçage permet d'équilibrer la pression entre la surface 30 et la surface 44 du piston 23 et d'éviter d'avoir à contrebalancer la pression du gaz récupéré avec la pression dans la chambre 29 lorsque l'on récupère du gaz de soufflage dont la pression est de l'ordre de 25 à 40 bar. Pour compenser cette pression et éviter que le piston 23 ne remonte lors de la récupération, si la seule pression dans la chambre 29 est disponible, il devient nécessaire d'augmenter sensiblement les dimensions, en particulier la surface, du secteur 27 du piston 23, ce qui augmente d'autant l'encombrement de la vanne 6. En équilibrant la pression dans la vanne 6 par le perçage 33, une pression bien plus faible est nécessaire pour déplacer le piston 23 et ses dimensions peuvent rester réduites.

Bien entendu, il existe des variantes au perçage du piston pour réaliser le même effet d'équilibrage. Ces variantes sont schématisées à la figure 2 et l'on peut réaliser, par exemple, un apport externe de gaz sous pression, par un conduit propre 35 qui serait reliée au conduit 34 amenant le gaz récupéré à l'entrée 21 de la vanne 6, ou par un autre conduit indépendant 36.

Une courbe d'évolution de la pression dans un emballage est représentée schématiquement à la figure 3 à titre d'exemple indicatif. Tout d'abord, on commence par une étape de pré-soufflage qui fait monter la pression à environ 6 bar, puis on passe à l'étape de soufflage proprement dit au cours de laquelle la pression s'élève à environ 35 bar au maximum, puis on passe à une étape de détente du gaz de soufflage, étape au cours de laquelle on réalise la récupération du gaz de soufflage. Afin de ne pas aplanir la courbe de détente, et donc d'allonger le temps de cycle de la machine de production, on récupère le gaz de soufflage jusqu'à l'obtention d'une pression de 17 bar environ dans l'emballage (point P dans la figure 3), le reste du gaz étant ensuite envoyé à l'air libre comme décrit ci-dessus.

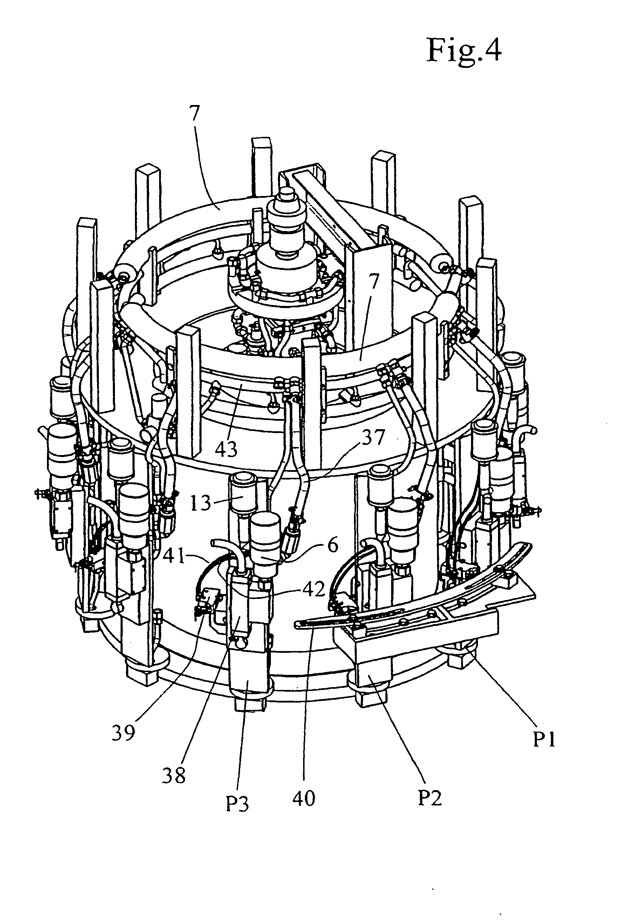

Une machine de soufflage d'emballage est décrite en référence à la figure 4. Cette machine est une machine de production rotative comportant 10 postes successifs et identiques de production d'emballages. Sur cette machine, les éléments déjà mentionnés précédemment sont identifiés au moyen des mêmes références numériques. On décrit donc un seul poste en détail, les autres étant construits de la même façon et il est important de noter que les moules ne sont pas représentés sur cette vue.

On y trouve en particulier une vanne de récupération 6 dont une sortie est reliée à un volume de récupération 7, dans le cas présent un réservoir en forme de "banane", au travers du conduit 37, et l'autre sortie à l'échappement silencieux 13. L'entrée de la vanne de récupération 6 est connectée à une vanne de sélection 38 qui, dans le cas présent, peut prendre trois positions, une première position pour permettre l'arrivée du gaz de pré-soufflage dans la préforme, une deuxième position pour permettre l'arrivée du gaz de soufflage dans la préforme et une troisième position pour permettre la décharge du gaz de soufflage au travers de la vanne de récupération 6 dans le réservoir 7. Cette vanne 38 correspond aux trois vannes 3, 4, 5 décrites en référence à la figure 1, et la commande pour passer d'une position à l'autre se fait généralement à l'aide de cames.

La commande de la position du piston dans la vanne 6 de récupération (voir la figure 2) est effectuée, dans un premier mode d'exécution, au moyen d'un distributeur 39 comportant une roulette et coopérant avec une came 40 réglable et disposée à côté de la machine de production. L'action de la came 40 sur la roulette permet de fermer la vanne 6 par le distributeur qui envoie un gaz sous pression, comme de l'air, dans la chambre 29 (figure 2) de la vanne 6 par l'un des conduits 41 ou 42, par conséquent la récupération du gaz de soufflage. Ainsi, la longueur de la came détermine le temps pendant lequel on peut récupérer le gaz de soufflage puisque la vitesse de rotation de la machine est connue. Dans le cas de la figure 4, deux postes sont en phases de récupération du gaz de soufflage, les postes P1 et P2 et le poste P3 est en phase de soufflage et sera le prochain à arriver dans la phase de récupération du gaz de soufflage.

Dans ce mode d'exécution, le gaz de soufflage récupéré dans le volume 7 est détendu et stocké dans un deuxième réservoir 43 pour être recyclé notamment comme gaz de pré-soufflage.

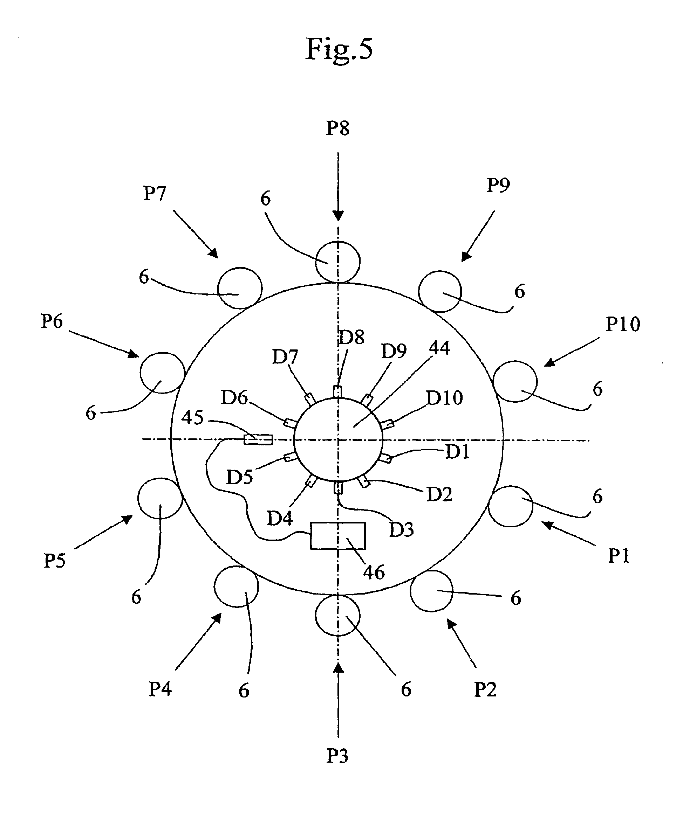

Un deuxième mode d'exécution de la commande de la vanne 6, on remplace le système mécanique roulette-came de la figure 4 par un système électromécanique, représenté à schématiquement à la figure 5. La machine représentée comprend comme dans la figure 4 10 postes successifs de soufflage P1 à P10. Pour des questions de simplification, on a schématisé ces 10 postes par leur vannes de récupération 6. Sur l'axe de la machine, on place une roue dentée 44 dont le nombre de dents D1 à D10 et leur situation correspond aux nombres de postes et à leur position respective. Un capteur fixe 45 est également nécessaire de façon à pouvoir détecter le passage de chaque dent D1 à D10 et il est relié à un automate programmable 46 qui commande notamment le processus de récupération du gaz de soufflage. Il est en outre indispensable d'utiliser des moyens d'initialisation du système, par exemple une dent particulière, de façon à ce qu'après un tour complet de machine, la position de chaque poste soit connue de l'automate programmable. Ainsi, dans ce mode d'exécution, ce n'est plus une came qui agit sur le distributeur (voir la figure 4) mais l'automate programmable 46 qui commande directement et de manière électrique, le distributeur agissant sur la vanne pour permettre la récupération du gaz de soufflage.

Par exemple, dans la situation de la figure 5, on peut considérer qu'entre les postes P10 et P9, on met en place une préforme 1 (figure 1), les postes P9-P8-P7-P6 correspondent aux opérations de pré-soufflage, les postes P6-P5-P4-P3-P2 correspondent aux opérations de soufflage, les postes P2-P1 à la détente du gaz de soufflage et à sa récupération et l'ouverture du moule 2 (figure 2) et l'évacuation de l'emballage formé hors de la machine sont effectué entre les postes P1 et P10. Dans cet exemple, on dispose donc du temps entre les postes P2 et P1 pour récupérer le gaz de soufflage et la vanne 6 de récupération peut être fermée pendant ce temps pour transférer le gaz de soufflage dans le volume de récupération. Le temps de cycle de la machine étant connu, il est facile de programmer l'automate programmable de façon à abaisser le piston de la vanne 6 d'un poste donné pour permettre la récupération pendant un temps T après le passage du capteur par la dent correspondant audit poste donné. L'ordre d'abaisser le piston d'une vanne peut être d'ailleurs donné soit après un certain nombre de passages de dents, ce qui correspondrait à une position d'arrêt de la machine soit après un certain temps, ce qui correspondrait à une position de mouvement de la machine, par exemple lorsque le poste P3 de la figure 5 se déplace pour prendre la position du poste P2.

La détermination du temps pendant lequel on effectue la récupération du gaz peut se faire soit par calcul, en tenant compte des temps de cycles de la machine en cause mais peut aussi s'ajuster de manière fine sur une machine en production. Un point de référence important dans la production d'emballages soufflés est le moment où les éléments tenant l'emballage sont désaccouplés de celui-ci et que l'étanchéité entre ces éléments et l'emballage est supprimée: si le temps qui a été attribué à la détente du gaz de soufflage est trop court, la pression dans l'emballage sera encore supérieure à la pression atmosphérique et lors de la suppression de l'étanchéité, il y aura une détente brusque qui générera du bruit. A l'oreille, dans une machine en production ayant un temps de cycle déterminé, il est donc possible de déterminer si la détente du gaz de soufflage s'est entièrement effectuée. Par analogie, et en particulier dans le mode d'exécution décrit ci-dessus dans lequel on utilise un automate programmable pour commander la récupération du gaz de soufflage pendant un temps déterminé T, on peut facilement varier ce temps déterminé T en l'augmentant jusqu'à ce que l'on perçoive la détente brusque du gaz encore contenu dans l'emballage soufflé lorsque l'étanchéité est supprimée. Dès que ce point est atteint, on peut diminuer ledit temps T jusqu'à disparition de cette détente brusque et on aura alors atteint le point optimal pour une récupération maximum du gaz de soufflage.

Bien entendu, un tel réglage peut aussi s'opérer sur une machine à commande à came (voir la figure 4) mai un tel ajustage est plus facile avec l'automate programmable de la machine de la figure 5.

Dans un autre mode d'exécution, on peut directement utiliser un capteur de pression combiné à un automate programmable, qui mesure la pression dans l'emballage pour commander la vanne de récupération du gaz et, par exemple, cesser la récupération quand une valeur de pression prédéterminée est atteinte dans les emballages soufflés. Ce mode d'exécution est particulièrement avantageux dans des machines de soufflages linéaires dans lesquelles tous les emballages sont soufflés en même temps. La pression de soufflage est identique dans tous les emballages et un seul capteur de pression suffit. En revanche, dans des machines rotatives telles que représentées dans les figures 4 et 5, le soufflage est séquentiel (un emballage après l'autre) de sorte qu'il est nécessaire d'employer un capteur de pression par poste. Pour des questions de coûts, cette solution n'est alors pas avantageuse dans une machine séquentielle.

La présente invention n'est pas limitée à une machine de soufflage rotative à 10 postes comme représentée dans les figures 4 et 5 mais s'applique à des machines rotatives comportant 1 à 48 postes et également à des machines de soufflage linéaires comprenant entre 1 et 40 postes.

## Revendications

1. Dispositif de soufflage d'emballages, en particulier de bouteilles, à partir d'une préforme (1) au moyen d'un gaz et de récupération dudit gaz, comprenant au moins des moyens pour alimenter le dispositif en gaz à une première pression et à une deuxième pression, des moyens d'étirage, des moyens de formage de l'emballage (2), des moyens de récupération (6,7), des moyens de détente à l'air libre dudit gaz jusqu'à ce qu'une troisième pression prédéterminée soit atteinte dans l'emballage, lesdits moyens de récupération comprenant au moins un volume de récupération (7) et une vanne de récupération (6), **caractérisé en ce qu'**il comporte des moyens de commande desdits moyens de récupération et de détente à l'air libre pendant et après la phase de récupération et des moyens d'ajustage permettant de régler le fonctionnement desdits moyens de commande.

2. Dispositif selon la revendication 1, **caractérisé en ce que** ledit volume de récupération comprend au moins un réservoir (7), ladite vanne (6) permettant au gaz de soufflage d'être détendu dans le réservoir (7) ou à l'air libre au moyen d'un piston (23) se déplaçant dans la vanne de récupération (6).

3. Dispositif selon la revendication 2, **caractérisé en ce que** la vanne de récupération (6) est commandée par des moyens mécaniques comprenant au moins une came (40) actionnant un distributeur (39) qui commande la position du piston (23) de ladite vanne (6).

4. Dispositif selon la revendication 2, **caractérisé en ce que** la vanne de récupération (6) est commandée par des moyens mécaniques associés à des moyens électriques comprenant au moins un système de détection de mouvement (44,45) relié à un automate programmable (46) qui pilote un distributeur commandant la position du piston (23) de ladite vanne (6).

5. Dispositif selon la revendication 2, **caractérisé en ce que** la vanne de récupération (6) est commandée par un capteur de pression relié directement à un automate programmable qui pilote un distributeur commandant la position du piston (23) de ladite vanne (6).

6. Dispositif selon l'une des revendications précédentes, **caractérisé en ce que** la vanne de récupération (6) comporte des moyens d'équilibrage de la pression interne de la vanne, lesdits moyens étant formés soit par un perçage (33) du piston (23), soit par un apport externe (35,36) de gaz sous pression.

7. Procédé de soufflage au moyen d'un gaz d'un emballage dans un moule à partir d'une préforme et de récupération du gaz de soufflage, comportant au moins les étapes suivantes:
- ) pré-soufflage à une première pression du gaz dans la préforme;
- ) soufflage à une deuxième pression du gaz dans la préforme pour obtenir l'emballage;
- ) récupération du gaz à la deuxième pression dans un volume de récupération jusqu'à l'obtention d'une troisième pression prédéterminée dans l'emballage;
- ) détente du gaz récupéré à une pression de récupération;
- )détente du gaz résiduel dans l'emballage à l'air libre;
- ) recyclage du gaz détendu,
**caractérisé par** les étapes suivantes:
- ) ajustage permettant le réglage de moyens de commande de la phase de récupération et de détente à l'air libre, et
- ) détente à l'air libre du gaz résiduel dans l'emballage pendant et après la phase de récupération.

8. Procédé selon la revendication 7, **caractérisé en ce que** la première pression vaut entre 4 et 16 bar, la deuxième pression vaut entre 25 et 40 bar et la troisième pression vaut environ 17 bar.

9. Procédé selon la revendication 7 ou 8, **caractérisé en ce que** le gaz récupéré est utilisé pour actionner des vérins d'étirage de la préforme, lesdits vérin étant actionnés pendant les étapes de pré-soufflage et de soufflage.

10. Procédé selon la revendication 7 à 9, **caractérisé en ce que** le gaz récupéré est utilisé pour actionner des consommables de la machine de production d'emballages ou est renvoyé dans un circuit commun de gaz comprimé.

## Claims

1. A device for blowing packaging, particularly bottles from a preform (1) using a gas and for recovering said gas, comprising at least means for supplying the device with gas at a first pressure and at a second pressure, means for stretching, means for forming the packaging (2), recovery means (6, 7), expansion means to the open air of said gas until a predetermined pressure is reached in the packaging, said recovery means comprising at least a recovery volume (7) and a recovery valve (6), **characterized in that** it comprises control means for controlling said recovery means and expansion means to the open air during and after the recovery step and adjusting means to adjust the operation of said control means.

2. The device as claimed in claim 1, **characterized in that** said recovery volume comprises at least a reservoir (7), said valve (6) allowing the blowing gas to be expanded in the reservoir (7) or in the open air by means of a piston (23) moving in the recovery valve (6).

3. The device as claimed in claim 2, **characterized in that** the recovery valve (6) is controlled by mechanical means comprising at least one cam (40) actuating a distributor (39) which controls the position of the piston (23) of said valve (6).

4. The device as claimed in claim 2, **characterized in that** the recovery valve (6) is controlled by mechanical means associated with electric means comprising at least one movement-detection system (44, 45) connected to a programmable controller (46) which drives a distributor controlling the position of the piston (23) of said valve (6).

5. The device as claimed in claim 2, **characterized in that** the recovery valve (6) is controlled by a pressure sensor connected directly to a programmable controller which drives a distributor controlling the position of the piston (23) of said valve (6).

6. The device as claimed in one of the preceding claims, **characterized in that** the recovery valve (6) comprises means for balancing the internal pressure of the valve, said means being formed either by a drilling (33) in the piston (23) or by an external addition (35, 36) of pressurized gas.

7. A method for blowing, by means of a gas, packaging in a mold from a preform and for recovering the blowing gas, comprising at least the following steps:
- pre-blowing the gas into the preform at a first pressure;
- blowing the gas into the preform at a second pressure in order to obtain the packaging;
- recovering the gas at the second pressure until a predetermined third pressure is obtained in the packaging;
- expanding the recovered gas to a recovery pressure;
- expanding the residual gas in the packaging to the open air;
- recycling the expanded gas;
**characterized by** the following steps:
adjusting control means of recovery step and
expansion step to the open air;
expansion to the open air of residual gas in the packaging during and after the recovery step.

8. The method as claimed in claim 7, **characterized in that** the first pressure is between 4 and 16 bar, the second pressure is between 25 and 40 bar and the third pressure is around 17 bar.

9. The method as claimed in claim 7 or 8, **characterized in that** the recovered gas is used to actuate preform-stretching rams, said rams being actuated during the pre-blowing and blowing steps.

10. The method as claimed in claim 7 to 9, **characterized in that** the recovered gas is used to actuate consumables of the packaging-production machine or is returned to a common compressed-gas circuit.

## Patentansprüche

1. Vorrichtung zum Blasformen von Verpackungen mit Hilfe eines Gases, insbesondere von Flaschen, ausgehend von einer Preform (1), wobei die Vorrichtung mindestens Mittel zur Speisung mit einem Gas unter einem ersten Druck und unter einem zweiten Druck aufweist, sowie Mittel zum Recken, Mittel zum Formen der Verpackung (2), Mittel zur Rückgewinnung (6, 7) und Mittel zum Ablassen des genannten Gases in die freie Umgebungsluft, bis in der Verpackung ein dritter, vorbestimmter Druck erreicht ist, wobei die Mittel zur Rückgewinnung mindestens ein Rückgewinnungsvolumen (7) und ein Rückgewinnungsventil (6) aufweisen, **dadurch gekennzeichnet, dass** die Vorrichtung weiterhin Mittel zur Steuerung der genannten Rückgewinnungsmittel und der Mittel zum Ablassen in die freie Umgebungsluft während und nach der Phase der Rückgewinnung sowie Mittel zur Einstellung umfasst, welche eine Steuerung der Arbeitsabläufe der genannten Steuermittel ermöglichen.

2. Vorrichtung nach Anspruch 1, **dadurch gekennzeichnet, dass** das genannte Rückgewinnungsvolumen mit mindestens einem Behälter (7) ausgestattet ist, wobei das genannte Ventil (6) dem Blasgas ermöglicht, sich in den Behälter (7) oder in die freie Umgebungsluft mit Hilfe eines Kolbens (23) zu entspannen, welcher sich im Rückgewinnungsventil (6) bewegt.

3. Vorrichtung nach Anspruch 2, **dadurch gekennzeichnet, dass** das Rückgewinnungsventil (6) durch mechanische Mittel gesteuert wird, welche mindestens einen Nocken (40) aufweisen, der einen Verteiler (39) betätigt, welcher die Stellung des Kolbens (23) im genannten Ventil (6) steuert.

4. Vorrichtung nach Anspruch 2, **dadurch gekennzeichnet, dass** das Rückgewinnungsventil (6) über mechanische Mittel gesteuert wird, welchen elektrische Mittel zugeordnet sind, die mindestens ein System von Bewegungsmeldern (44, 45) umfassen, wobei das System an einen programmierbaren Automaten (46) angeschlossen ist, der einen Verteiler beeinflusst, welcher die Stellung des Kolbens (23) im genannten Ventil (6) steuert.

5. Vorrichtung nach Anspruch 2, **dadurch gekennzeichnet, dass** das Rückgewinnungsventil (6) über eine Drucksonde gesteuert wird, welche unmittelbar mit einem programmierbaren Automaten verbunden ist, welcher einen Verteiler beeinflusst, der die Stellung des Kolbens (23) im genannten Ventil (6) steuert. -)

6. Vorrichtung nach einem der vorstehenden Ansprüche, **dadurch gekennzeichnet, dass** das Rückgewinnungsventil (6) Mittel zum Ausgleich des Innendrucks des Ventils aufweist, wobei diese Mittel entweder durch eine Bohrung (33) im Kolben (23) oder aber durch eine äussere Zufuhr (35, 36) von Druckgas verwirklicht sind.

7. Verfahren zum Blasformen einer Verpackung in einer Form mit Hilfe eines Gases, ausgehend von einer Preform, und zur Wiedergewinnung von Blasgas, wobei das Verfahren mindestens die folgenden Schritte umfasst:
- Vorgängiges Blasen mit Hilfe des Gases in der Preform unter einem ersten Druck;
- Blasen mit Hilfe des Gases in der Vorform unter einem zweiten Druck, wobei die Verpackung fertig gestellt wird;
- Rückgewinnung des Gases unter dem zweiten Druck in einem Rückgewinnungsvolumen bis zu einem dritten, vorbestimmten Druck in der Verpackung;
- Entspannen des in der Verpackung verbliebenen Restgases in die freie Umgebungsluft;
- Rückgewinnung und erneuter Einsatz des entspannten Gases,
**gekennzeichnet durch** die folgenden Verfahrensschritte:
- Einstellung zwecks Regelung der Steuermittel beim Rückgewinnungsschritt und der Entspannung in die freie Umgebungsluft, und
- Entspannung des in der Verpackung verbliebenen Restgases in die freie Umgebungsluft während und nach der Rückgewinnungsphase.

8. Verfahren nach Anspruch 7, **dadurch gekennzeichnet, dass** der erste Druck zwischen 4 und 16 bar, der zweite Druck zwischen 25 und 40 bar und der dritte Druck ungefähr 17 bar beträgt.

9. Verfahren nach Anspruch 7 oder 8, **dadurch gekennzeichnet, dass** das zurückgewonnene Gas zur Betätigung der Ziehkolben für die Preform verwendet wird, wobei diese Kolben während dem Vorblasen und dem Blasformen in Tätigkeit gesetzt werden.

10. Verfahren nach Anspruch 7 bis 9, **dadurch gekennzeichnet, dass** das zurückgewonnene Gas zum Antrieb der Verbrauchsmaterialien der Maschine zur Herstellung von Verpackungen verwendet wird oder in einen gemeinsamen Kreislauf von komprimiertem Gas eingespeist wird.
